# EUROPEAN PATENT SPECIFICATION

(11) **EP 0 567 502 B1**
(45) Date of publication and mention of the grant of the patent: **08.05.1996**
(21) Application number: 92902791.0
(22) Date of filing: 17.01.1992
(51) Int. Cl.: F16J 15/32, B29C 33/00, B29C 69/00, B29D 31/00

(54) **METHOD OF MANUFACTURING A SEALING RING**
VERFAHREN ZUR HERSTELLUNG EINES DICHTUNGSRINGS
PROCEDE DE FABRICATION D'UN ANNEAU D'ETANCHEITE

(30) Priority: 18.01.1991 GB 9101130
(43) Date of publication of application: 03.11.1993
(73) Proprietor: JAMES WALKER & COMPANY LIMITED, Woking Surrey GU22 8AP (GB)
(72) Inventor: WARREN, Peter, John Lion Works, Surrey GU22 8AP (GB)
(74) Representative: Brown, David Alan
(86) International application number: GB9200102
(87) International publication number: WO9213217

(56) References cited:
- DE-A- 2 338 373
- US-A- 3 309 096
- US-A- 3 563 555
- US-A- 3 626 540
- US-A- 4 883 279

## Description

The invention relates to a method of manufacturing a sealing ring, according to the precharacterising part of claim 1.

The invention is particularly applicable to rotary lip seals, but may also be applied to other sealing rings.

In replacing a rotary lip seal, or fitting a new seal, it is often necessary to cut the sealing ring to enable it to be fitted around the shaft without dismantling the equipment to which the seal is to be fitted. To enable the seal to perform in a manner comparable with that of an endless seal, it is necessary to bond the ends of the split sealing ring together. In doing so, it is difficult to achieve accurate alignment of the ends of the ring, and particularly of the lip. The problem is made more difficult by the restricted space into which, in most cases, the seal has to be fitted.

It is known to manufacturer split sealing rings by moulding the ring as an endless ring and making a generally radial cut through the ring to split the ring. An example of this is shown by published patent application DE-A-2338373. In the published application, a device is provided to align the ends of the split sealing ring when it is installed, consisting of two body members which are connected to one another by a threaded spindle, and which are clamped to the endless ring before the ring is cut between the body members. The body members are then separated and re-connected together on installation of the ring, to align the ends of the ring. This requires a relatively complex device, and is not suitable for sealing rings which are to be installed in confined spaces.

It is also known to join the ends of a split sealing ring on installation of the ring, by means of an insert fitting into recesses in the ends of the split ring. Patent US-A-3309096 describes a split O-ring, the ends of which are joined by means of a pin projecting from one end of the ring and received in a socket in the other end. The pin may be moulded into the end of the ring during manufacture. It is difficult with such an arrangement to ensure that the pin and socket are positioned to ensure accurate alignment of the ends of the ring. Patent US-A-4883279 describes a sealing system for a rotatable shaft, comprising a flexible sealing member which is wrapped around the shaft and then cut to length. The sealing member has a cavity extending through its length, and a separate connecting member is used to join the cut ends of the sealing member together, the connecting member extending into the cavity at each end. This system is not suitable for the manufacture of sealing rings which are moulded in endless form and then split.

It is the object of this invention to provide an improved method of manufacturing a sealing ring, which enables the ends of the split ring to be accurately aligned on subsequent installation of the sealing ring.

In accordance with this invention, there is provided a method of manufacturing a sealing ring of a mouldable material by moulding the ring as an endless ring and splitting the ring by making a generally radial cut through the ring, characterised in that the method comprises:
(a) moulding the endless ring with an inlay piece moulded into the body of the ring at at least one location, the inlay piece extending generally circumferentially and being of a material which does not bond to the material of the ring,
(b) making the generally radial cut through the ring and the inlay piece so that a portion of the inlay piece remains in the body of the ring on each side of the cut,
(c) removing the portions of the inlay piece to leave aligned recesses in the two ends of the split ring, and
(d) providing an insert with dimensions corresponding to that of the inlay piece so that the insert can be inserted into the aligned recesses to align the ends of the ring when they are subsequently joined together.

The invention also includes a sealing ring manufactured by this method. In fitting such a sealing ring around a shaft, the insert is inserted into the recess in one end of the split ring, and, after the ring is positioned around the shaft, the insert is pushed into the recess in the other end of the ring, to ensure alignment of the two ends of the ring as they are joined together. A suitable adhesive is applied to the mating ends of the ring, and may also be applied to the insert.

The insert may be made of any suitable material, such as nylon. The inlay piece used in manufacturing the ring may be made of any suitable material which does not bond to the material of the ring during the moulding process. For example, where the body of the ring is made from conventional elastomeric material, or elastomer impregnated fabric, the inlay piece may be of ptfe.

When the above method is applied to lip seals, it may be that the insert, whilst providing sufficiently accurate alignment of the body of the sealing ring does not ensure sufficiently accurate alignment of the lip profile.

To solve this problem, the method of manufacture of the present invention, in a preferred aspect, includes the further steps of moulding a block of material onto the sealing ring at the location of the cut, so that the block of material after removal from the ring has a recess corresponding in profile to part of the profile of the sealing ring.

The block of material can then be used as a jig in joining the ends of the split ring to ensure that the mating ends of the sealing ring received within the jig are accurately aligned.

The block of material may, for example, be of a cold-curing silicone rubber, which can be poured into a temporary mould formed around the ring at the location of the cut. When the method of the invention is applied to a lip seal, the block may be cast around the lip and part of the body of the sealing ring, so that, in fitting the ring around a shaft, the block can be used to align the cut ends of the lip and can then be easily removed from the sealing ring by pulling it clear of the lip.

The block may be moulded onto the sealing ring after the ring has been split and re-joined using the alignment insert. Alternatively, the block may be moulded onto the endless ring at the location at which it is to be cut, and separated from the ring before the cut is made.

In some circumstances, it may be possible to dispense with the alignment insert, and rely on the moulded block alone to achieve accurate alignment of the cut ends of the sealing ring. The invention therefore includes, in accordance with a further aspect, a method of joining together the ends of a split sealing ring, comprising moulding a block of material onto the sealing ring at the location of the split, so that the block is formed with a recess corresponding in profile to the profile of part of the sealing ring, removing the block from the sealing ring, and using the block to align the ends of the sealing ring after the ring has been positioned around the shaft to which it is to be fitted and whilst the ends of the ring are bonded together. As in the form of the invention mentioned above, the block may be moulded into an endless ring before the ring is cut to form the split sealing ring.

The invention also includes a method of joining together the ends of a sealing ring manufactured in accordance with any of the forms of the invention defined above, the method comprising applying adhesive to the cut ends of the sealing ring, positioning the sealing ring around the shaft to which it is to be fitted, aligning the ends of the sealing ring using the alignment insert and/or alignment block referred to, applying pressure to the ring to bring the ends of the seal into engagement, and, if an alignment block is used, subsequently removing the block.

The invention will now be described, by way of example, with reference to the accompanying drawings in which:
Figure 1 is a radial cross-section through a conventional rotary lip seal,
Figure 2 is a radial cross-section through a rotary lip seal provided with an alignment insert and jig in accordance with the invention, and
Figures 3 to 6 illustrate stages in the process of manufacturing the sealing ring of Figure 2.

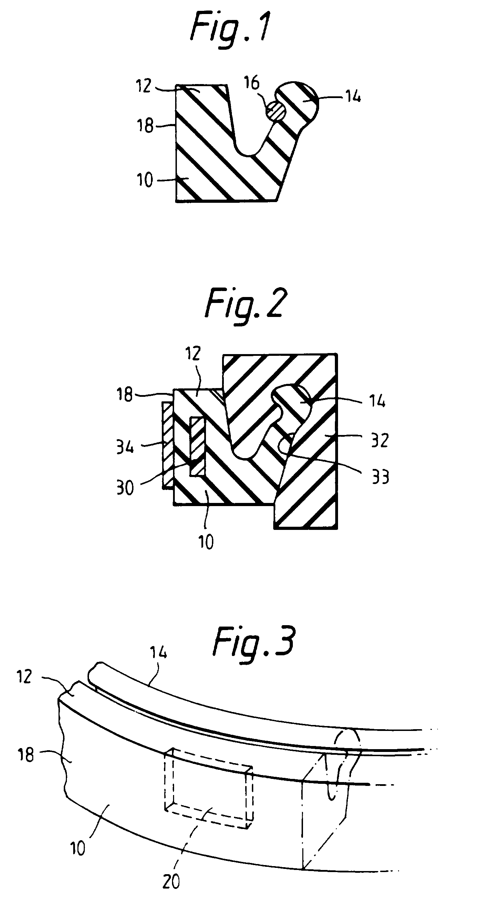

The drawings illustrate one embodiment of the invention as applied to a rotary lip seal as shown in Figure 1. The seal consists of a sealing ring 10 having a body 12 and a lip 14. As is well known, the body 12 may be formed from plies of elastomeric impregnated fabric and the lip 14 from elastomeric material moulded onto the body. An annular spring 16 fits into a recess in the lip 14 to hold the lip in engagement with the shaft to which the seal is fitted.

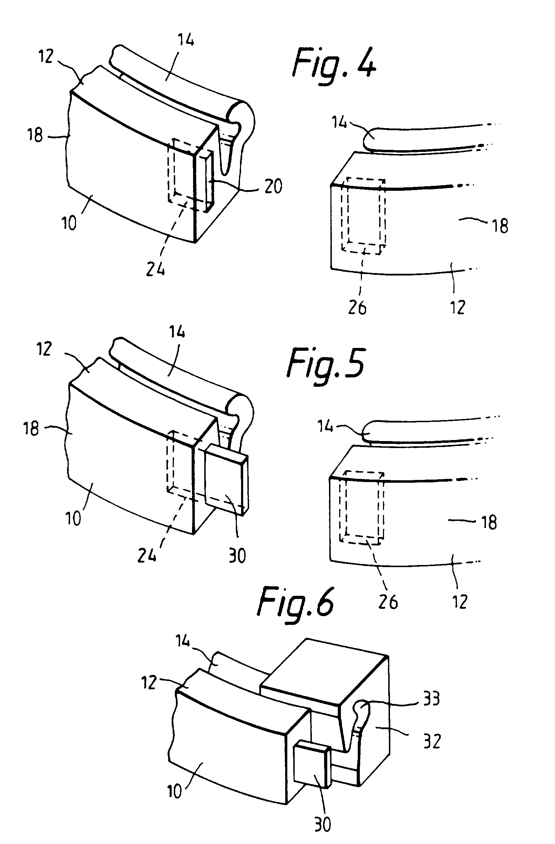

In manufacture of the sealing ring in accordance with the invention, an endless ring is made in the conventional manner, except that an inlay 20 of ptfe is positioned between two adjacent plies of elastomer impregnated fabric in the mould, so that after vulcanisation the inlay 20 is moulded into the body 12 of the sealing ring, as shown in Figure 3 (the inlay 20 occupying the same position as is subsequently occupied by insert 30, as shown in Figure 2). The ptfe inlay 20 is a rectangular strip of uniform cross-section. After the endless ring has been removed from the mould, a radial cut is made through the ring at about the mid-point of the ptfe inlay 20, so that the inlay 20 is also cut, leaving about half the length of the inlay in the body 12 of the ring at each side of the cut, as shown in Figure 4. To mark the position at which the cut is to be made, a suitable mark can be made on the mould when the ptfe inlay is inserted, which can then be transferred to the ring after moulding. Alternatively, the ptfe inlay could be made with a narrow tab extending from the mid-point of the inlay to a point at which the end of the tab will appear at one axial end face of the body 12 of the sealing ring 10, to mark the location at which the cut is to be made. After the cut has been made, the two pieces of the inlay 20 are removed from the body of the sealing ring and discarded, leaving two aligned recesses 24 and 26 in the ends of the ring.

A nylon insert 30, having dimensions corresponding to that of the ptfe inlay 20 is inserted into one of the recesses 24, as shown in Figure 5. The portion of the nylon insert 30 projecting from the end of the sealing ring 10 provides a tab which, when it is inserted into the corresponding recess 26 in the other end of the sealing ring, enables the ends of the sealing ring to be accurately aligned. In particular, the insert provides accurate alignment at the outer circumferential face 18 of the body of the sealing ring.

To provide additional alignment for the lip 14, a block 32 of silicone rubber is moulded onto the lip 14 and part of the body 12 of the sealing ring 10, the block 32 extending to each side of the position at which the radial cut is to be made in the ring. The block 32 is formed by forming a suitably shaped temporary mould around the sealing ring 10 at the location of the cut, and pouring a cold-curing silicone rubber into the mould. After the rubber is cured, the block 32 can be easily detached from the sealing ring, the elasticity of the silicone rubber enabling the block 32 to be pulled from the lip 14 of the ring. The block 32 provides a jig, with a recess 33 precisely matching the profile of the lip 14 and the adjacent portion of the body 12 of the ring 10, to enable the lip profiles at the ends of the split sealing ring to be accurately aligned when fitting the ring.

In fitting the sealing ring 10 to a shaft, the nylon insert 30 is inserted into one of the recesses 24, after being coated with a suitable adhesive. The mating end faces of the ring 10 are coated with adhesive, and one end of the ring is pushed into the rubber block 32 until the end face is at approximately the mid point of the block. The sealing ring is then placed around the shaft, and the other end of the sealing ring is pushed into the block 32, at the same time as the projecting portion of the nylon insert 30 engages in the recess 26. The ends of the sealing ring are pushed towards one another until their faces are a short distance apart. A steel clamping band 34 is then placed around the sealing ring, engaging the outer circumferential face 18 of the ring. The band 34 is of the jubilee clip type, with a clamp mechanism for pulling together the ends of the band to apply pressure to the sealing ring, to bring the mating end faces of the sealing ring together and apply pressure between them. The mechanism may be preset so that, when the clamp is tightened, the appropriate degree of compression is applied to the mating faces of the sealing ring. The adhesive employed may be of any suitable type, for example a two-component epoxy resin adhesive. To shorten the curing time of the adhesive, heat may be applied to the join, for example using a hot air gun.

After an appropriate time, the metal band 34 and the rubber block 32 are removed from the sealing ring 10. The spring 16 is then fitted into the recess in lip 14, and the sealing ring fitted into the seal housing in the usual way.

The sealing ring of the invention may be supplied as a kit, together with the nylon insert, the rubber alignment block, metal clamp and adhesive.

The invention provides a split sealing ring, in which the ends of the ring can be bonded together with accurate alignment on both the outer face of the ring and at the lip profile, so that the sealing ring will have performance characteristics comparable with those of an endless ring.

Since the alignment block can be of relatively small size, the invention enables the ends of the ring to be joined in situ, even in situations where space is very restricted.

## Claims

1. A method of manufacturing a sealing ring (10) of mouldable material by moulding the ring as an endless ring and splitting the ring by making a generally radial cut through the ring, characterised in that the method comprises:
(a) moulding the endless ring with an inlay piece (20) moulded into the body (12) of the ring (10) at at least one location, the inlay piece (20) extending generally circumferentially and being of a material which does not bond to the material of the ring (10).
(b) making the generally radial cut through the ring (10) and the inlay piece (20) so that a portion of the inlay piece (20) remains in the body (12) of the ring on each side of the cut.
(c) removing the portions of the inlay piece (12) to leave aligned recesses (24, 26) in the two ends of the split ring (10), and
(d) providing an insert (30) with dimensions corresponding to that of the inlay piece (20) so that the insert (30) can be inserted into the aligned recesses (24, 26) to align the ends of the ring (10) when they are subsequently joined together.

2. A method as claimed in Claim 1, further comprising moulding a block (32) of material onto the sealing ring (10) at the location of the cut, so that the block (32) of material after removal from the ring (10) has a recess (33) corresponding in profile to part of the profile of the sealing ring (10).

3. A method as claimed in Claim 2, for manufacturing a rotary lip seal, in which the block (32) of material is moulded onto the lip (14) and part of the body (12) of the sealing ring (10).

4. A method as claimed in Claim 2 or Claim 3, comprising moulding the block (32) onto the endless sealing ring (10) at the location at which it is to be cut, and separating the block (32) from the sealing ring (10) before the cut is made.

5. A method as claimed in Claim 2 or Claim 3, comprising moulding the block (32) onto the sealing ring (10) after the ring has been split and re-joined using the said insert (30).

6. A method as claimed in any one of Claims 2 to 5, comprising removing the block (32) from the sealing ring (10), using the block (32) to align the ends of the sealing ring (10) after the ring has been positioned around the shaft to which it is to be fitted and whilst the ends of the ring are bonded together, and removing the block (32) from the ring (10) after the ends have been bonded together.

## Patentansprüche

1. Verfahren zur Herstellung eines Dichtungsrings (10) aus formbarem Material durch Formen des Rings als einen Endlosring und Teilen des Rings durch Vornehmen eines insgesamt radialen Schnitts durch den Ring, dadurch **gekennzeichnet**, daß das Verfahren folgende Schritte aufweist:
(a) Formen des Endlosringes mit einem Einlageteil (20), das in den Körper (12) des Rings (10) an mindestens einer Stelle eingeformt ist, wobei das Einlageteil (20) sich insgesamt in Umfangsrichtung erstreckt und aus einem Material besteht, das sich nicht mit dem Material des Rings (10) verbindet.
(b) Vornehmen des insgesamt radialen Schnitts durch den Ring (10) und das Einlageteil (20), so daß ein Abschnitt des Einlageteils (20) im Körper (12) des Rings auf jeder Seite des Schnittes verbleibt.
(c) Entfernen der Abschnitte des Einlageteils (12), um ausgerichtete Aussparungen (24, 26) in den beiden Enden des geteilten Rings (10) zu hinterlassen, und
(d) Bereitstellen eines Einsatzes (30) mit Abmessungen, die denen des Einlageteils (20) entsprechen, so daß der Einsatz (30) in die ausgerichteten Aussparungen (24, 26) eingeführt werden kann, um die Enden des Ringes (10) auszurichten, wenn sie nachfolgend zusammengefügt werden.

2. Verfahren, wie beansprucht in Anspruch 1, ferner mit dem Formen eines Materialblocks (32) auf dem Dichtungsring (10) an der Stelle des Schnitts, so daß der Materialblock (32) nach Entfernung vom Ring (10) eine Aussparung (33) aufweist, die im Profil einem Teil des Profils des Dichtungsrings (10) entspricht.

3. Verfahren, wie beansprucht in Anspruch 2, zur Herstellung einer rotierenden Lippendichtung, worin der Materialblock (32) auf die Lippe (14) und einen Teil des Körpers (12) des Dichtungsring (10) aufgeformt wird.

4. Verfahren, wie beansprucht in Anspruch 2 oder Anspruch 3, mit dem Aufformen des Blocks (32) auf dem endlosen Dichtungsring (10) an der Stelle, an der er durchzuschneiden ist, und dem Abtrennen des Blocks (32) vom Dichtungsring (10), bevor der Schnitt durchgeführt wird.

5. Verfahren, wie beansprucht in Anspruch 2 oder Anspruch 3, mit dem Aufformen des Blocks (32) auf dem Dichtungsring (10), nachdem der Ring geteilt und unter Verwendung des genannten Einsatzes (30) wieder zusammengefügt wurde.

6. Verfahren, wie beansprucht in irgendeinem der Ansprüche 2 bis 5, mit dem Entfernen des Blocks (32) vom Dichtungsring (10), dem Benutzen des Blocks (32), um die Enden des Dichtungsrings (10) auszurichten, nachdem der Ring rund um die Welle angeordnet wurde, an welcher er passend angebracht werden soll, und während die Enden des Ringes zusammengeklebt werden, sowie dem Entfernen des Blocks (32) vom Ring (10), nachdem die Enden zusammengeklebt wurden.

## Revendications

1. Procédé de fabrication d'un anneau d'étanchéité (10) en matière moulable, par moulage de l'anneau sous la forme d'un anneau sans fin et division de l'anneau par exécution d'une coupe sensiblement radiale à travers l'anneau, caractérisé en ce que le procédé comprend :
(a) le moulage de l'anneau sans fin avec incorporation d'une pièce (20) moulée dans le corps (12) de l'anneau (10) à au moins un endroit, la pièce incorporée (20) s'étendant sensiblement circonférentiellement et étant en une matière qui ne se lie pas à la matière de l'anneau (10) ;
(b) l'exécution de la coupe sensiblement radiale à travers l'anneau (10) et la pièce incorporée (20) de sorte qu'une partie de la pièce incorporée (20) reste dans le corps (12) de l'anneau de chaque côté de la coupe ;
(c) l'enlèvement des parties de la pièce incorporée (12) de manière à laisser des logements alignés (24, 26) dans les deux extrémités de l'anneau fendu (10) ; et
(d) la préparation d'un insert (30) dont les dimensions correspondent à celles de la pièce incorporée (20), de sorte qu'on peut introduire l'insert (30) dans les logements alignés (24, 26) pour aligner les extrémités de l'anneau (10) qu'on relie ensuite l'une à l'autre.

2. Procédé suivant la revendication 1, comprenant en outre le moulage d'un bloc de matière (32) sur l'anneau d'étanchéité (10) à l'endroit de la coupe, de sorte que le bloc de matière (32) après sa séparation de l'anneau (10) présente un évidement (33) dont le profil correspond à une partie du profil de l'anneau d'étanchéité (10).

3. Procédé suivant la revendication 2, pour la fabrication d'une garniture d'étanchéité rotative à lèvre, dans lequel le bloc de matière (32) est moulé sur la lèvre (14) et une partie du corps (12) de l'anneau d'étanchéité (10).

4. Procédé suivant la revendication 2 ou la revendication 3,comprenant le moulage du bloc (32) sur l'anneau d'étanchéité sans fin (10) à l'endroit où celui-ci doit être coupé, et la séparation du bloc (32) et de l'anneau d'étanchéité (10) avant l'exécution de la coupe.

5. Procédé suivant la revendication 2 ou la revendication 3, comprenant le moulage du bloc (32) sur l'anneau d'étanchéité (10) après la coupe de l'anneau et sa nouvelle jonction au moyen du dit insert (30).

6. Procédé suivant une quelconque des revendications 2 à 5, comprenant la séparation du bloc (32) et de l'anneau d'étanchéité (10), l'utilisation du bloc (32) pour aligner les extrémités de l'anneau d'étanchéité (10) après mise en place de l'anneau autour de l'arbre sur lequel il doit être monté et pendant que les extrémités de l'anneau sont liées l'une à l'autre, et l'enlèvement du bloc (32) de l'anneau (10) après liaison des extrémités l'une à l'autre.
